# EUROPÄISCHE PATENTSCHRIFT

(11) **EP 1 619 601 B1**
(45) Veröffentlichungstag und Bekanntmachung des Hinweises auf die Patenterteilung: **05.03.2014**
(21) Anmeldenummer: 04017075.5
(22) Anmeldetag: 20.07.2004
(51) Int. Cl.: G06K 7/00

(54) **Verfahren für ein RFID-System mit wenigstens einem Kanal zur Kommunikation zwischen einer Schreib-/Lesestation und wenigstens einem Transponder sowie Schreib-/Lesestation**
Method for RFID system with at least one communication channel between a recording/reading unit and at least one transponder and corresponding recording/reading unit
Méthode pour un système RFID avec au moins un canal de communication entre un lecteur/enregistreur et un transpondeur ainsi qu'un lecteur/enregistreur correspondant

(43) Veröffentlichungstag der Anmeldung: 25.01.2006
(73) Patentinhaber: Feig Electronic GmbH, 35781 Weilburg-Waldhausen (DE)
(72) Erfinder: Reichwein, Elmar, 65599 Dornburg-Wilsenroth (DE); Desch, Markus, 65527 Niedernhausen (DE)
(74) Vertreter: Knefel, Cordula

(56) Entgegenhaltungen:
- US-A- 5 828 693
- US-A1- 2003 031 231

## Beschreibung

Die Erfindung betrifft ein Verfahren für ein RFID-System mit wenigstens einem Kanal zur Kommunikation zwischen einer Schreib-/Lesestation und wenigstens einem Transponder sowie eine Schreib-/Lesestation.

Es existieren national unterschiedliche Funkvorschriften, die entweder besagen, dass eine Schreib-/Lesestation nur für eine sehr begrenzte Dauer auf einem gewählten Kanal senden darf, um dann auf einen anderen Sendekanal zu wechseln, wie dies zum Beispiel für die USA in der FCC 47 CFR Part 15 festgelegt ist, oder die vorschreiben, dass eine Schreib-/Lesestation nur dann auf einem bestimmten Kanal senden darf, wenn auf diesem Kanal nicht bereits ein anderer Sender aktiv sendet, wie dies für die europäische Norm Draft ETSI EN 302 208 vorgesehen ist.

Gemäß dem Stand der Technik (US-PS 5,828,693) wird eine Schreib-/Lesestation beschrieben, die es ermöglicht festzustellen, ob ein von der Schreib-/Lesestation verwendeter Sendekanal auch durch eine weitere in der Nähe befindliche Schreib-/Lesestation verwendet wird. Diese Realisierung hat jedoch den Nachteil, dass die Schreib-/Lesestation durch den Wechsel auf einen anderen Sendekanal unter Umständen die Kommunikation zwischen einer weiteren, auf diesem Kanal arbeitenden Schreib-/Lesestation stört und damit eventuell ein laufender Datenaustausch zwischen dieser Schreib-/Lesestation und einem Transponder unterbrochen wird. Ferner kann diese Schreib-/Lesestation nicht dort eingesetzt werden, wo die Funkvorschrift besagt, dass der Sender erst dann senden darf, wenn er zuvor geprüft hat, ob der entsprechende Sendekanal von keinem anderen Sender benutzt wird. Ein weiterer Nachteil dieser Schreib-/Lesestation ist, dass die Suche nach einem freien Sendekanal relativ zeitaufwändig ist, da die Schreib-/Lesestation jeweils zunächst auf dem eingestellten Kanal zu senden beginnt, bevor sie feststellen kann, ob der Kanal wirklich ungenutzt ist und so schrittweise einen freien Kanal suchen muss.

Gemäß dem Stand der Technik (US 2003/0031231 A1) ist es bekannt, innerhalb von vorgegebenen Zeitintervallen die Kanäle zu wechseln. Gemäß diesem Stand der Technik wird ein belegter Kanal nur dann festgestellt, nachdem es zu einer Kanalkollision gekommen ist und Datentelegramme zerstört wurden. Nachteil dieses zum Stand der Technik gehörenden Verfahrens ist, dass erst aus einem zerstörten Datenpaket durch eine entsprechende Analyse festgestellt wird, dass der Kanal belegt ist.

Das der Erfindung zugrunde liegende technische Problem besteht darin, eine Schreib-/Lesestation und ein Verfahren anzugeben, mit dem die Schreib-/Lesestation in der Lage ist, möglichst schnell und ohne Störung einer weiteren Schreib-/Lesestation einen freien Sendekanal zu ermitteln und die Bandbreite des Empfängers so zu wählen, dass eine möglichst hohe Datenrate für die Rückantwort des Transponders genutzt werden kann, ohne dass das Sendesignal durch andere Sender in anderen Kanälen gestört wird.

Dieses technische Problem wird durch ein Verfahren mit den Merkmalen des Anspruches 1 sowie durch Schreib-/Lesestationen mit den Merkmalen der Ansprüche 15 gelöst.

Die Erfindung betrifft eine Schreib-/Lesestation eines RFID-Systems, das in einem Frequenzbereich mit mehreren Sendekanälen arbeiten kann, und ein Verfahren, das es ermöglicht, dass beim Betrieb von mehreren Schreib-/Lesestationen in verschiedenen Sendekanälen sichergestellt ist, dass jede Schreib-/Lesestation einen anderen Kanal zum Senden benutzt, und dass eine solche Schreib-/Lesestation und ein solches Verfahren zur Ermittlung eines freien Sendekanals keine Störungen auf den Sende- und Empfangskanälen anderer Schreib-/Lesestationen verursacht. Weiterhin betrifft die Erfindung eine Schreib-/Lesestation und ein Verfahren, die alle freien Sendekanäle in einem Frequenzband ermitteln können und daraus den optimalen Arbeitskanal zum Senden und Empfangen bestimmen, wobei die Schreib-/Lesestation den Sendekanal so wählt, dass die Schreib-/Lesestation eine möglichst große Empfangsbandbreite nutzen kann und damit eine möglichst hohe Empfangsdatenrate möglich ist.

Die Erfindung ist für solche RFID-Systeme besonders vorteilhaft, bei denen ein vorgegebenes Frequenzband in eine Reihe von diskreten Sende-/Empfangskanälen innerhalb des Frequenzbandes unterteilt ist, und es der Schreib-/Lesestation obliegt, innerhalb des vorgegebenen Frequenzbandes einen Sende-/Empfangskanal auszuwählen, auf dem sie mit einem oder mehreren Transpondern kommunizieren kann.

Weiterhin ermöglicht die erfindungsgemäße Schreib-/Lesestation auch, dass Transpondertypen der neuesten Technologie vollständig unterstützt werden. Diese neuen Transponder können ihre Antwortdaten mit unterschiedlich schnellen Datenraten an die Schreib-/Lesestation zurücksenden, wobei die hohe Datenrate der Rückantwort des Transponders eine Kanalbandbreite des Empfängers der Schreib-/Lesestation notwendig macht, die um ein Mehrfaches höher sein kann als die von der Schreib-/Lesestation zum Senden verwendete Kanalbandbreite. Die Wahl einer hohen Rückantwort-Datenrate setzt damit voraus, dass der Empfänger der Schreib-/Lesestation eine dementsprechend hohe Empfangsbandbreite aufweist. Besonders vorteilhaft ist es, wenn der Empfänger der Schreib-/Lesestation so ausgelegt ist, dass er nicht nur in der Lage ist, Daten auf dem aktuellen Sendekanal zu empfangen, sondern auch Daten auf den dem Sendekanal jeweils benachbarten Kanälen zu empfangen. Damit die vom Transponder mit hoher Datenrate zurückgesendeten Daten von der Schreib-/Lesestation empfangen werden können, muss jedoch auch gewährleistet sein, dass neben dem eigenen Sendekanal auch die direkt benachbarten oberen und unteren Kanäle zum Zeitpunkt der Kommunikation mit dem Transponder von keiner weiteren Schreib-/Lesestation als Sendekanal verwendet werden, was es erforderlich macht, dass die Schreib-/Lesestation vor dem Datenaustausch mit dem Transponder feststellen kann, ob diese Kanäle frei von anderen Sendern sind.

Ein weiteres technisches Problem, das durch die zugrunde liegende Erfindung gelöst wird, ist die Ermittlung eines freien Sendekanals und die Umschaltung auf diesen, ohne die Kommunikation mit dem Transponder zu beeinflussen oder gar zu stören. Dauert die Kommunikation mit einem Transponder beispielsweise länger als die maximal zulässige Zeit, die sich eine Schreib-/Lesestation auf einem Sendekanal aufhalten darf, muss die Schreib-/Lesestation während der Kommunikation mit dem Transponder den Sendekanal wechseln. Dazu ist es für die Schreib-/Lesestation besonders vorteilhaft, wenn sie bereits vor dem Wechsel des Sendekanals ermitteln kann, welche Sendekanäle frei sind und auf welchen Sendekanal sie wechseln kann. Je schneller die Schreib-/Lesestation einen freien Sendekanal ermitteln kann und je schneller sie auf diesen freien Sendekanal wechseln kann, um so schneller kann sie mit einem oder mehreren Transpondern kommunizieren, was beispielsweise bei einer Vielzahl sich bewegender Transponder, die sich gleichzeitig im Empfangsbereich der Schreib-/Lesestation befinden, von besonderer Wichtigkeit ist.

Weitere Merkmale und Vorteile der Erfindung ergeben sich anhand der zugehörigen Zeichnungen, in denen Ausführungsbeispiele des erfindungsgemäßen Verfahrens sowie die erfindungsgemäße Schreib-/Lesestation beispielhaft dargestellt sind, und zwar zeigen:
- Fig. 1: ein Frequenzdiagramm mit einem Sender auf einem Kanal;
- Fig. 2: ein Frequenzdiagramm beim Abhören der Kanäle;
- Fig. 3: ein Frequenzdiagramm mit eingestelltem Sender und eingestellter Empfangsbandbreite;
- Fig. 4: ein Blockschaltbild einer erfindungsgemäßen Schreib-/Lesestation mit einer Empfangseinheit;
- Fig. 5: ein Blockschaltbild einer erfindungsgemäßen Schreib-/Lesestation mit einer Empfangseinheit und getrennter Sende- und Empfangsantenne;
- Fig. 6: ein Blockschaltbild einer Empfangseinheit;
- Fig. 7: ein Blockschaltbild einer Empfangseinheit mit I- und Q-Kanal;
- Fig. 8: ein Blockschaltbild einer erfindungsgemäßen Schreib-/Lesestation mit zwei Empfangseinheiten zum gleichzeitigen Senden auf einem Kanal und Abhören der anderen Kanäle;
- Fig. 9: ein Blockschaltbild einer erfindungsgemäßen Schreib-/Lesestation mit zwei Empfangseinheiten zum gleichzeitigen Senden auf einem Kanal und Abhören der anderen Kanäle, wobei das Abhören über eine zusätzliche Empfangsantenne erfolgt;
- Fig. 10: ein Blockschaltbild einer erfindungsgemäßen Schreib-/Lesestation mit zwei Empfangseinheiten zum gleichzeitigen Senden auf einem Kanal und Abhören der anderen Kanäle, wobei die Frequenzen zum Senden umgeschaltet werden können.

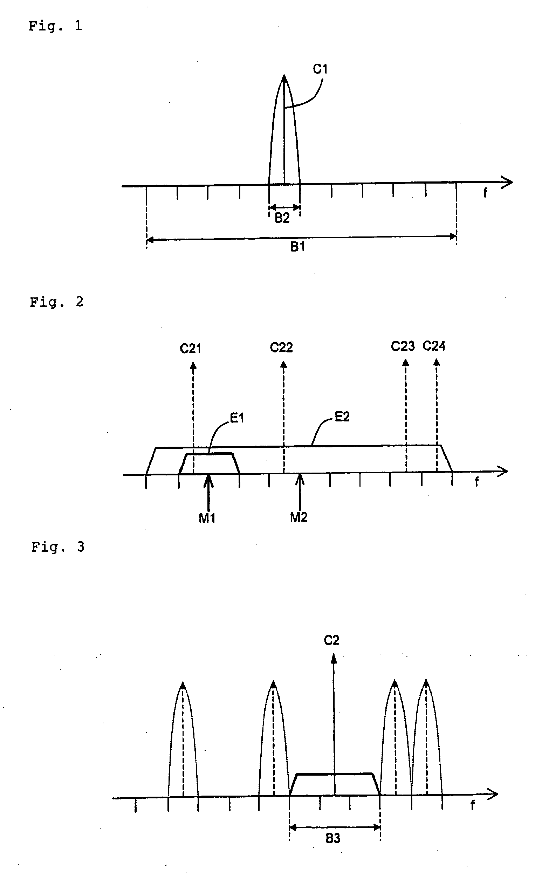

Fig. 1 zeigt ein Frequenzdiagramm mit einem belegten Kanal (C1). Das komplette Frequenzband (B1) ist in mehrere Kanäle unterteilt, die je eine Kanalbandbreite (B2) aufweisen.

Fig. 2 zeigt beispielhaft ein Frequenzdiagramm, das das Abhören der Kanäle darstellt. Der Sender der eigenen Schreib-/Lesestation ist hierbei abgeschaltet. Die Kanäle (C21, C22, C23, C24) stellen die Sender anderer Systeme dar, die auf jeweils verschiedenen Kanälen arbeiten. Mittels einer Transformation des demodulierten Empfangssignales in dem Frequenzbereich, zum Beispiel durch eine Fast-Fourier-Transformation (FFT) oder eine komplexe FFT, werden die einzelnen Kanäle analysiert, ohne dass dazu jede Frequenz des zu analysierenden Kanals voreingestellt werden muss. Vielmehr ist es ausreichend, eine Frequenz, die vorteilhaft in einem Bereich um die Mitte des zu analysierenden Frequenzbandes liegt, als Referenzfrequenz vorzugeben.

Der Einsatz einer komplexen FFT ist besonders vorteilhaft, weil das Ergebnis dieses Verfahrens, welches den Realteil und Imaginärteil des Empfangssignales auswertet, neben dem Abstand der empfangenden Frequenzen von der Referenzfrequenz auch ein Vorzeichen enthält, welches anzeigt, welche Frequenzen oberhalb und unterhalb der Referenzfrequenz im Empfangssignal enthalten sind.

Durch Variieren des Bandbereiches kann die Anzahl der gleichzeitig abgetasteten Kanäle eingestellt werden. Dazu wird die Frequenz (M1) zwischen zwei Kanäle gelegt und der Bandbereich auf die doppelte Kanalbandbreite (B2) eingestellt. Es ergibt sich ein Bandbereich (E1), der die links und rechts von der Frequenz (M1) liegenden Kanäle überspannt.

Liegt die Frequenz (M2) in einem Bereich nahe der Mitte des Frequenzbandes (B1) und ist der Bandbereich (E2) auf die Größe des Frequenzbandes (B1) eingestellt, können alle Kanäle im Frequenzband (B1) gleichzeitig erfasst und analysiert werden.

Fig. 3 zeigt ein weiteres vorteilhaftes Verfahren, bei dem der Kanal (C2) zum Kommunizieren mit Transpondern so gelegt ist, dass die Kanäle links und rechts von Kanal (C2) nicht von anderen Systemen verwendet werden. Die Empfangsbandbreite (B3) kann dadurch vergrößert werden, wodurch auch die Datenrate zur Kommunikation mit Transpondern vergrößert werden kann.

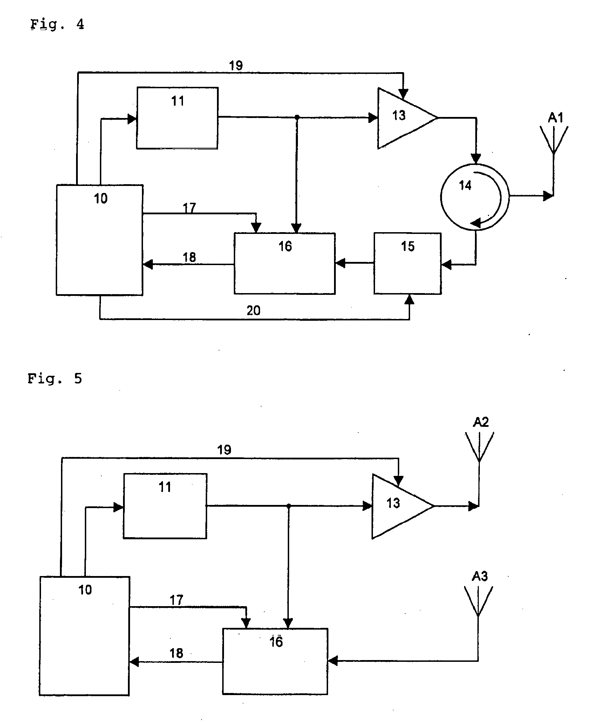

Fig. 4 zeigt ein Blockschaltbild einer erfindungsgemäßen Schreib-/Lesestation mit einer Sende- und Empfangsantenne (A1). Eine Auswerte- und Steuereinheit (10) sendet Daten an einen Frequenz-Synthesizer (11), der die Frequenz des gewünschten Kanals einstellt und sein Ausgangssignal zum einen Teil einem Leistungsverstärker (13) und zum anderen Teil einer Empfangseinheit (16) zuführt. Der Leistungsverstärker (13) wird über eine Steuerleitung (19) während der Suche nach freien Kanälen abgeschaltet, so dass er kein Ausgangssignal an einen Zirkulator (14) ausgibt. Wird der Leistungsverstärker (13) über eine Steuerleitung (17) eingeschaltet, wird das Sendesignal vom Leistungsverstärker (13) über den Zirkulator (14) an die Antenne (A1) geführt. Der Zirkulator (14) führt die von der Antenne (A1) empfangenen Signale über ein steuerbares Dämpfungsglied (15) an die Empfangseinheit (16).

Das Dämpfungsglied (15) hat dabei die vorteilhafte Eigenschaft, dass sein Dämpfungsfaktor über eine Steuerleitung (20) verändert werden kann. Während über den Leistungsverstärker (13) und Zirkulator (14) ein Signal gesendet wird, kann das Dämpfungsglied auf eine hohe Dämpfung des über den Zirkulator (14) eingespeisten Signals eingestellt werden, um die Empfangseinheit (16) vor Übersteuerung oder Zerstörung zu schützen. Der Dämpfungsfaktor des Dämpfungsglieds (15) kann dann über die Steuerleitung (20) auf einen geringen Wert eingestellt werden, wenn die Empfangseinheit für die Suche nach freien Kanälen verwendet wird, wobei in dieser Zeit der Leistungsverstärker (13) über die Steuerleitung (19) abgeschaltet ist.

Die der Empfangseinheit (16) über das Dämpfungsglied (15) zugeführten empfangenen Signale werden in der Empfangseinheit (16) demoduliert. Dabei kann die Empfangsbandbreite der Empfangseinheit (16) von der Auswerte- und Steuereinheit (10) über die Steuerleitung (17) eingestellt werden. Das demodulierte Signal wird über eine Verbindung (18) an die Auswerte- und Steuereinheit (10) geführt und dort ausgewertet. Je nach Ausführungsform kann die Auswerte- und Steuereinheit (10) beim Abhören der Kanäle zum Beispiel eine FFT oder eine komplexe FFT durchführen.

Da die Empfangseinheit (16) bei großer Empfangsbandbreite eine geringere Empfindlichkeit aufweist, was daraus resultiert, dass bei großer Bandbreite der empfangende Störsignalpegel zunimmt und damit die Unterscheidung zwischen Nutz- und Störsignal erschwert wird, ist es insbesondere bei hoher Empfangsbandbreite vorteilhaft, die Auswertung der Empfangssignale mittels einer FFT oder einer komplexen FFT durchzuführen. Außerdem ist damit das gleichzeitige Überprüfen aller Kanäle im eingestellten Bandbereich möglich.

Fig. 5 zeigt eine weitere Ausführungsform. In dieser Ausführungsform ist eine erfindungsgemäße Schreib-/Lesestation so aufgebaut, dass zum Senden und Empfangen verschiedene Antennen verwendet werden. Fig. 5 zeigt ein Blockschaltbild einer erfindungsgemäßen Schreib-/Lesestation, bei der im Gegensatz zu dem Blockschaltbild in Fig. 4 der Leistungsverstärker (13) direkt an eine Sendeantenne (A2) und die Empfangseinheit (16) direkt an eine Empfangsantenne (A3) angeschlossen sind. Dadurch wird kein Zirkulator (14) und kein Dämpfungsglied (15) benötigt.

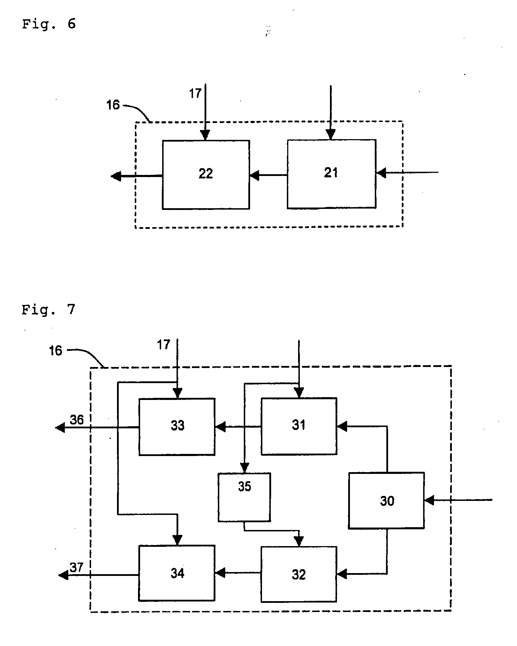

Fig. 6 zeigt ein Blockschaltbild einer erfindungsgemäßen Empfangseinheit (16). Das von einer Antenne (nicht dargestellt) empfangene Signal und die vom Frequenz-Synthesizer (11) eingestellte Frequenz (M1) oder (M2), die vorteilhaft in einem Bereich nahe der Mitte des Bandbereiches (E1) oder (E2) liegt, wird an einen Demodulator (21) geführt, der beispielsweise als Mischer oder als Diodendetektor ausgeführt sein kann. Vom Demodulator gelangt das demodulierte Signal an ein Filter (22), welches in einer Ausführungsform so aufgebaut sein kann, dass es über die Steuerleitung (17) von der Auswerte- und Steuereinheit (10) eingestellt werden kann. Das Filter (22) kann alternativ als digitales Filter in der Auswerte- und Steuereinheit (41) oder als der Auswerte- und Steuereinheit (41) vorgelagertes analoges Filter aufgebaut sein.

In Fig. 7 ist ein Blockschaltbild einer weiteren vorteilhaften Ausführungsform einer erfindungsgemäßen Empfangseinheit (16) dargestellt. Die Empfangseinheit (16) demoduliert das von einer Antenne (nicht dargestellt) empfangene Signal durch eine Quadraturdemodulation. Hierzu wird das empfangene Signal an einen Power-Splitter (30) geführt, der das Signal zu einem Teil an einen Demodulator I-Kanal (31) und zum anderen Teil an einen Demodulator Q-Kanal (32) gibt.

Die vom Frequenz-Synthesizer (11) eingestellte Frequenz gelangt an den Demodulator I-Kanal (31) und über einen zusätzlichen 90°-Phasenschieber (35) an den Demodulator Q-Kanal (32). Über von der Auswerte- und Steuereinheit (10) eingestellte Filter I-Kanal (33) und Filter Q-Kanal (34) gelangen die demodulierten Signale über Verbindungen (36, 37) zur Auswertung an die Auswerte- und Steuereinheit (10).

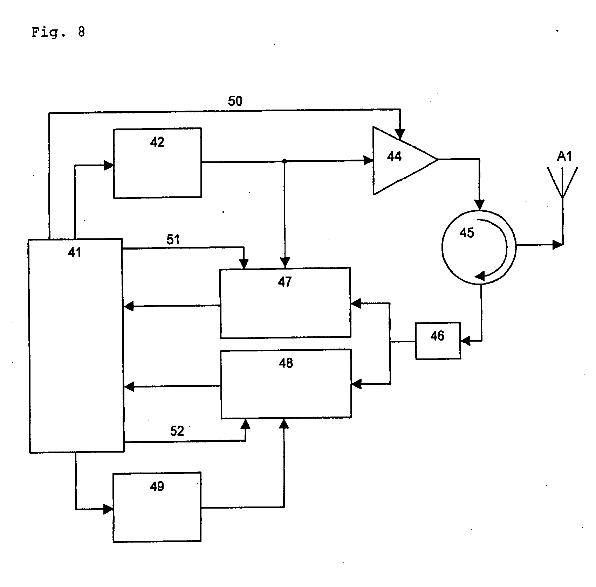

Fig. 8 zeigt ein Blockschaltbild einer weiteren vorteilhaften Ausführung einer erfindungsgemäßen Schreib-/Lesestation, bei der das Senden und die Suche nach freien Kanälen gleichzeitig möglich ist.

Während der Aufbau aus Frequenz-Synthesizer (42) und Leistungsverstärker (44) sowie Zirkulator (45), Dämpfungsglied (46) und Empfangseinheit (47) der Schreib-/Lesestation in Fig. 4 entspricht, können über eine zusätzliche Empfangseinheit (48), deren Frequenz für den Demodulator von einem Frequenz-Synthesizer (49) und deren Filter über eine Steuerleitung (52) eingestellt wird, beliebige Kanäle auf "Frei" beziehungsweise "Belegt" überprüft werden. Die Auswertung und Steuerung erfolgt über eine Auswerte- und Steuereinheit (41).

Für die beiden Empfangseinheiten (47, 48) können auch wieder die Ausführungsformen wie in Fig. 5 oder Fig. 6 eingesetzt werden. Das Dämpfungsglied (46) ist immer aktiviert, da auch während des Überprüfens auf freie Kanäle der Leistungsverstärker (44) über eine Steuerleitung (50) eingeschaltet ist.

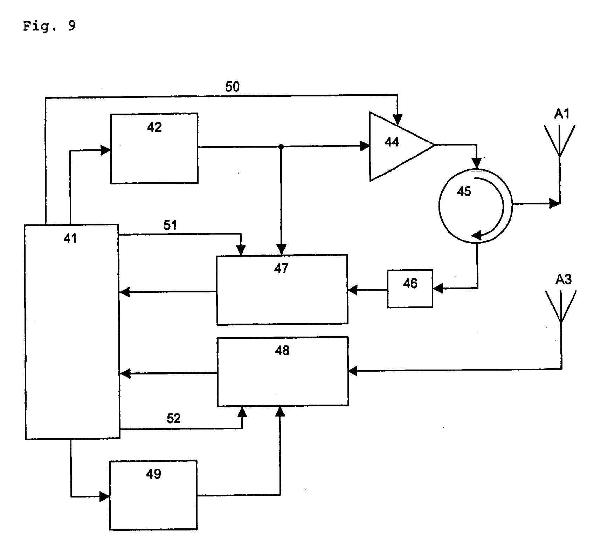

In Fig. 9 ist eine weitere mögliche Ausführungsform einer erfindungsgemäßen Schreib-/Lesestation dargestellt, bei der wie in Fig. 8 ein gleichzeitiges Senden und Abhören möglich ist. In dieser Ausführungsform wird das Signal zum Abhören jedoch über eine zusätzliche Empfangsantenne (A3) an die Empfangseinheit (48) geführt. Die Empfangseinheit (47) ist weiterhin über das Dämpfungsglied (46) und den Zirkulator (45) mit der Sende- und Empfangsantenne (A1) verbunden.

Bei einer weiteren Ausführungsform können die Empfangseinheiten (47, 48) auch direkt auf eine gemeinsame Empfangsantenne (A3) und der Sender über den Leistungsverstärker direkt an eine Sendeantenne (A2), wie in Fig. 5 dargestellt, angeschlossen sein.

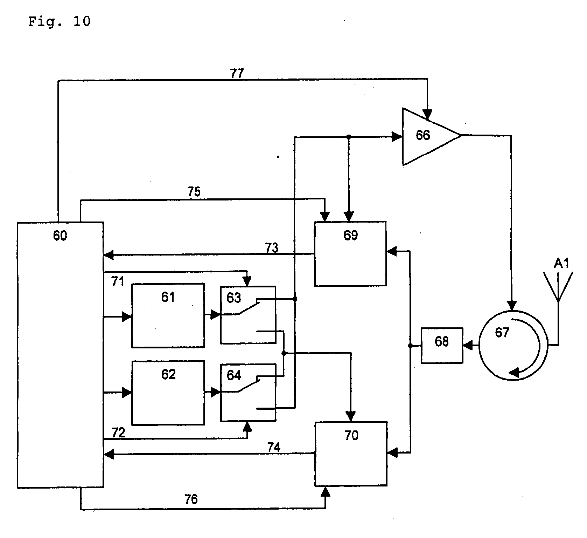

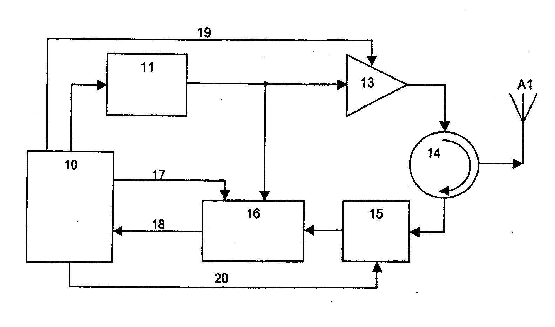

Eine weitere vorteilhafte Ausführungsform einer erfindungsgemäßen Schreib-/Lesestation ist in Fig. 10 dargestellt. Hierbei können die vom Frequenz-Synthesizer (61) oder vom Frequenz-Synthesizer (62) eingestellten Frequenzen über Umschalter (63, 64) wechselweise zur Erzeugung der Sendefrequenz auf einen Leistungsverstärker (66) oder auf eine Empfangseinheit (70) zur Überprüfung der Kanalbelegungen geschaltet werden.

Während zum Beispiel die Sendefrequenz über den Frequenz-Synthesizer (61) eingestellt wird, wird über den Frequenz-Synthesizer (62) die Frequenz zum Abhören der Kanäle eingestellt. Nach dem Abhören wird der Frequenz-Synthesizer (62) auf die nächste freie Sendefrequenz eingestellt. Erst nach Einstellung der neuen Sendefrequenz durch den Frequenz-Synthesizer (62) werden die Umschalter (63, 64) so über deren Steuerleitungen (73, 74) umgeschaltet, dass nun die neue Sendefrequenz am Leistungsverstärker (66) und die zuvor eingestellte Sendefrequenz von dem Frequenz-Synthesizer (61) an der Empfangseinheit (70) anliegt.

Durch die Voreinstellung der neuen Sendefrequenz kann erreicht werden, dass so gut wie keine Unterbrechung der RF-Sendeleistung zum Transponder auftritt.

Die nächste Sendefrequenz wird anschließend durch Einstellen der Frequenz an dem Frequenz-Synthesizer (61) ermittelt und die neue Sendefrequenz eingestellt, bevor ein erneuter Umschaltvorgang durch die Auswerte- und Steuereinheit (60) eingeleitet wird.

### Bezugszahlen

- A1: Sende- und Empfangsantenne
- A2: Sendeantenne
- A3: Empfangsantenne
- B1: Frequenzband
- B2: Kanalbandbreite
- B3: Empfangsbandbreite (aktiver Kanal)
- C1: belegter Kanal
- C2: belegter Kanal
- C21: belegter Kanal (von anderer Schreib-/Lesestation)
- C22: belegter Kanal (von anderer Schreib-/Lesestation)
- C23: belegter Kanal (von anderer Schreib-/Lesestation)
- C24: belegter Kanal (von anderer Schreib-/Lesestation)
- E1: Bandbereich (zum Abhören von Kanälen)
- E2: Bandbereich (zum Abhören von Kanälen)
- M1: Frequenz zwischen zwei Kanälen
- M2: Frequenz zwischen zwei Kanälen
- 10: Auswerte- und Steuereinheit
- 11: Frequenz-Synthesizer
- 13: Leistungsverstärker
- 14: Zirkulator
- 15: Dämpfungsglied
- 16: Empfangseinheit
- 17: Steuerleitung der Empfangseinheit (16)
- 18: demoduliertes Signal von Empfangseinheit (16)
- 19: Steuerleitung des Leistungsverstärkers (13)
- 20: Steuerleitung des Dämpfungsgliedes (15)
- 21: Demodulator
- 22: Filter
- 30: Power-Splitter
- 31: Demodulator I-Kanal
- 32: Demodulator Q-Kanal
- 33: Filter I-Kanal
- 34: Filter Q-Kanal
- 35: Phasenschieber 90°
- 36: demoduliertes Signal I-Kanal
- 37: demoduliertes Signal Q-Kanal
- 41: Auswerte- und Steuereinheit
- 42: Frequenz-Synthesizer für Sende- und Empfangsfrequenz
- 44: Leistungsverstärker
- 45: Zirkulator
- 46: Dämpfungsglied
- 47: Empfangseinheit 1
- 48: Empfangseinheit 2
- 49: Frequenz-Synthesizer für Abhörfrequenz
- 50: Steuerleitung des Leistungsverstärkers (44)
- 51: Steuerleitung der Empfangseinheit 1 (47)
- 52: Steuerleitung der Empfangseinheit 2 (48)
- 60: Auswerte- und Steuereinheit
- 61: Frequenz-Synthesizer 1
- 62: Frequenz-Synthesizer 2
- 63: Umschalter 1
- 64: Umschalter 2
- 66: Leistungsverstärker
- 67: Zirkulator
- 68: Dämpfungsglied
- 69: Empfangseinheit 1
- 70: Empfangseinheit 2
- 71: Steuerleitung Umschalter 1 (63)
- 72: Steuerleitung Umschalter 2 (64)
- 73: demoduliertes Signal von Empfangseinheit 1 (69)
- 74: demoduliertes Signal von Empfangseinheit 2 (70)
- 75: Steuerleitung Empfangseinheit 1 (69)
- 76: Steuerleitung Empfangseinheit 2 (70)
- 77: Steuerleitung Leistungsverstärker (66)

## Patentansprüche

1. Verfahren für ein RFID-System mit wenigstens einem Kanal zur Kommunikation zwischen einer Sehreib-/Lesestation und wenigstens einem Transponder, bei dem ein vorgegebenes Frequenzband in eine Reihe von diskreten Sende-/Empfangskanälen innerhalb des Frequenzbandes unterteilt ist, bei dem die Schreib-/Lesestation innerhalb des vorgegebenen Frequenzbandes einen Sende-/Empfangskanal auswählt, auf dem sie mit einem oder mahreren ranspondern kommunizieren kann, und eine Demodulation eines Empfangssignals vom Transponder in der Schreib-/Lesostation erfolgt,
**dadurch gekennzeichnet, dass** die Schreib-/Lesestation vor dem Wechsel des Sendekanals eine Belegung wenigstens eines Kanals (C1, C2, C21, C22, C23, C24) durch Einstellung wenigstens eines Frequenz-Synthesizers (11, 29, 61, 62) auf einen Bandbereich (E1, E2), der den wenigstens einen zu prüfenden Kanal (C1, C2, C21, C22, C23, C24) einschließt, feststellt, und dass die Belegung eines Kanals (C1, C2, C21, C22, C23, C24) durch die Auswertung einer Transformation des durch die Empfangseinheit empfangenen Signals in dem Frequenzbereich festgestellt wird.

2. Verfahren nach Anspruch 1, **dadurch gekennzeichnet, dass** der wenigstens eine Frequenz-Synthesizer (11, 49, 61, 62) so eingestellt wird, dass seine Frequenz innerhalb des wenigstens einen zu prüfenden Kanals (C1, C2, C21, C22, C23, C24) eingestellt ist.

3. Verfahren nach Anspruch 1, **dadurch gekennzeichnet, dass** der wenigstens eine Frequenz-Synthesizer (11, 49, 61, 62) so eingestellt wird, dass seine Frequenz im mittleren Bereich des zu prüfenden Frequenzbandes eingestellt ist.

4. Verfahren nach Anspruch 1, **dadurch gekennzeichnet, dass** die Belegung eines Kanals (C1 C2, C21, C22, C23, C24) durch die Auswertung einer FFT (Fast-Fourier-Transformation) oder komplexen FFT des durch die Empfangseinheit (16, 47, 48, 69, 70) empfangenen Signals festgestellt wird.

5. Verfahren nach einem der vorherigen Ansprüche, **dadurch gekennzeichnet, dass** die Empfangseinheit (16, 47, 48, 69, 70) der Schreib-/Lesestation auf eine Bandbreite eingestellt wird, so dass wenigstens zwei Kanäle (C1, C2, C21, C22, C23, C24) gleichzeitig ausgewertet und deren Belegung überprüft werden.

6. Verfahren nach Anspruch 5, **dadurch gekennzeichnet, dass** die Bandbreite der Empfangseinheit (16, 47, 48, 69, 70) durch Verstellen der Bandbreite eines Filters (22) einstellbar ist.

7. Verfahren nach Anspruch 3, **dadurch gekennzeichnet, dass** die Bandbreite der Empfangseinheit (16, 47, 48, 69, 70) annähernd auf die Hälfte des zu überprüfenden Bandes (B1) eingestellt wird, und damit die gleichzeitige Auswertung des gesamten Frequenzbandes möglich ist.

8. Verfahren nach Anspruch 6, **dadurch gekennzeichnet, dass** die Bandbreite der Empfangseinheit (16, 47, 48, 69, 70) so eingestellt ist, dass sie wenigstens 1 MHz beträgt und damit die gleichzeitige Auswertung eines 2 MHz breiten Frequenzbandes ermöglicht.

9. Verfahren nach einem der vorherigen Ansprüche, **dadurch gekennzeichnet, dass** die Empfindlichkeit des Empfangs während der Prüfung auf freie Kanäle (C1, C2, C21, C22, C23, C24) durch Reduzieren der Dämpfung des empfangenen Signals erhöht wird.

10. Verfahren nach einem der vorherigen Ansprüche, **dadurch gekennzeichnet, dass** die Kommunikation mit dem wenigstens einen Transponder und die Überprüfung auf Belegung der Kanäle (C1, C2, C21, C22, C23, C24) gleichzeitig durchgeführt wird.

11. Verfahren nach Anspruch 10, **dadurch gekennzeichnet,**
- **dass** die Auswertung von Transponder-Signalen auf einem Kanal (C1, C2, C21, C22, C23, C24) durch Verwendung wenigstens einer Empfangseinheit (47, 69) durchgeführt wird, deren Demodulator die Sendefrequenz von einem Frequenz-Synthesizer (42, 61), der mit dem Sender verbunden ist, zugeführt wird, und deren Bandbreite der zur Dekodierung der Transponder-Datenrate benötigten Bandbreite entspricht, und dass
- die Überprüfung auf Belegung der anderen Kanäle (C1, C2, C21, C22, C23, C24) von wenigstens einer weiteren Empfangseinheit (48, 70) durchgeführt wird, deren Demodulator die Frequenz von einem anderen Frequenz-Synthesizer (49, 62), der mit dem Sender nicht verbunden ist, zugeführt wird, und dass
- die Auswertung und die Überprüfung gleichzeitig durchgeführt werden.

12. Verfahren nach Anspruch 11, **dadurch gekennzeichnet, dass** jeder der Frequenz-Synthesizer (61, 62) mit dem Sender und der Empfangseinheit (69) zur Kommunikation mit den Transpondern oder mit der Empfangseinheit (70) zur Überprüfung auf freie Kanäle verbindbar ist.

13. Verfahren nach Anspruch 12, **dadurch gekennzeichnet, dass** der Umschaltvorgang von dem Frequenz-Synthesizer (61), der auf die aktuelle Sendefrequenz eingestellt ist, auf den Frequenz-Synthesizer (62), der die Belegung der anderen Kanäle überprüft, erst dann durchgeführt wird, wenn der Frequenz-Synthesizer (62) zur Überprüfung der Kanalbelegungen einen freien Kanal eingestellt hat.

14. Verfahren nach einem der vorherigen Ansprüche, **dadurch gekennzeichnet, dass** ein freier Kanal gewählt wird, der wenigstens einen unmittelbar benachbarten freien Kanal oberhalb und wenigstens einen unmittelbar benachbarten freien Kanal unterhalb aufweist.

15. Schreib-/Lesestation eines RFID-Systems mit wenigstens einem Kanal zur Kommunikation zwischen der Schreib-/Lesestation und wenigstens einem Transponder, wobei der Kanal von der Schreib-/Lesestation wählbar ist, mit wenigstens einem Frequenz-Synthesizer, der mit einem Leistungsverstärker (13) und mit wenigstens einer Empfangseinheit (16) verbunden ist, wobei die wenigstens eine Empfangseinheit (16) wenigstens einen Demodulator (21), wenigstens ein Filter (22) und wenigstens eine Steuer- und Auswerteeinheit (10) aufweist
**dadurch gekennzeichnet,**
**dass** der wenigstens eine Filter (22) als einstellbares Filter ausgebildet ist und die Filterbandbreite so wählbar ist, dass die Kanäle (C1, C2, C21, C22, C23, C24) des kompletten Frequenzbandes (B1) von der Filterbandbreite eingeschlossen sind, derart, dass die Belegung eines Kanals (C1, C2, C21, C22, C23, C24) durch die Auswertung einer Transformation des durch die Empfangseinheit empfangenen Signals in dem Frequenzbereich feststellbar ist, und dass die Belegung wenigstens eines Kanals (C1, C2, C21, C22, C23, C24) vor dem Wechsel des Sendekanals überprüfbar ist.

16. Schreib-/Lesestation nach Anspruch 15 zur Durchführung des verfahrens nach Anspruch 1, **dadurch gekennzeichnet, dass** die Empfindlichkeit des Empfangs der Schreib-/Lesestation während der Überprüfung des wenigstens einen Kanals (C1, C2, C21, C22, C23, C24) durch Änderung des Dämpfungsfaktors des wenigstens einen Dämpfungsgliedes (15) der Schreib-/Lesestation einstellbar ist.

17. Schreib-/Lesestation nach Anspruch 15 oder 16, **dadurch gekennzeichnet, dass** die Empfangseinheit (16) wenigstens zwei parallele Filter (22) aufweist, wobei der eine Filter eine Filterbandbreite aufweist, derart, dass die Kanäle des kompletten Frequenzbandes davon eingeschlossen sind, und der andere Filter eine den Empfang von Transponder-Signalen ermöglichende Filterbandbreite aufweist.

18. Schreib-7Lesestation nach Anspruch 15, 16 oder 17, **dadurch gekennzeichnet, dass** die wenigstens eine Empfangseinheit (16) einen an die wenigstens eine Auswerte- und Steuereinheit (10) führenden I-Kanal und einen an die wenigstens eine Auswerte- und Steuereinheit (10) führenden Q-Kanal aufweist, so dass durch die Auswerte- und Steuereinheit (10) eine komplexe FFT des abgetasteten Signals durchführbar ist.

19. Schreib-/Lesestation nach Anspruch 15, 16 oder 17, **dadurch gekennzeichnet,**
- **dass** die Schreib-/Lesestation wenigstens zwei getrennte Empfangseinheiten (47) und (48) aufweist,
- **dass** die wenigstens erste Empfangseinheit (47) zur Auswertung von Transponder-Signalen auf einem Kanal vorgesehen ist,
- **dass** die wenigstens erste Empfangseinheit (47) einen ersten einem Demodulator die Sendefrequenz zuführenden Frequenz-Synthesizer (42), der mit dem Leistungsverstärker (44) verbunden ist, aufweist, und dass die Bandbreite der wenigstens ersten Empfangseinheit (47) der zur Dekodierung der Transponder-Datenrate benötigten Bandbreite entspricht,
- **dass** wenigstens eine weitere Empfangseinheit (48) zur Überprüfung auf Belegung der anderen Kanäle vorgesehen ist,
- **dass** die wenigstens eine weitere Empfangseinheit (48) einen zweiten einem Demodulator die Sendefrequenz zuführenden, mit dem Sender nicht verbundenen Frequenz-Synthesizer (49) aufweist, und
- **dass** die Auswertung und die Überprüfung gleichzeitig durchführbar sind.

20. Schreib-/Lesestation nach einem der Ansprüche 15 bis 18, **dadurch gekennzeichnet, dass** die Schreib-/Lesestation wenigstens zwei Frequenz-Synthesizer (61, 62) und wenigstens eine Umschaltvorrichtung (63, 64) aufweist, und dass jeder der Frequenz-Synthesizer (61, 62) mittels der wenigstens einen Umschaltvorrichtung (63, 64) mit dem Sender und der Empfangseinheit (69) zur Kommunikation mit den Transpondern oder mit der Empfangseinheit (70) zur Überprüfung auf freie Kanäle verbindbar ist.

21. Schreib-/Lesestation nach Anspruch 15, **dadurch gekennzeichnet, dass** der Leistungsverstärker (13) über eine Steuerleitung (19) während der Suche nach freien Kanälen abschaltbar ist.

## Claims

1. Method for an RFID system with at least one channel for communication between a write/read station and at least one transponder, wherein a predetermined frequency band is subdivided into a series of discrete transmitting/receiving channels within the frequency band, wherein the write/read station selects a transmitting/receiving channel within the predetermined frequency band on which it can communicate with one or more transponders, and a demodulation of a received signal from the transponder takes place in the write/read station,
**characterized in that** before the transmitting channel is changed the write/read station determines an occupancy of at least one channel (C1, C2, C21, C22, C23, C24) by adjusting at least one frequency synthesizer (11, 29, 61, 62) to a band range (E1, E2) including the at least one channel (C1, C2, C21, C22, C23, C24) to be checked, and **in that** the occupancy of a channel (C1, C2, C21, C22, C23, C24) is determined by the evaluation of a transform of the signal received by the receiving unit in the frequency range.

2. Method according to claim 1, **characterized in that** the at least one frequency synthesizer (11, 49, 61, 62) is adjusted so that its frequency is set within the at least one channel (C1, C2, C21, C22, C23, C24) to be checked.

3. Method according to claim 1, **characterized in that** the at least one frequency synthesizer (11, 49, 61, 62) is adjusted so that its frequency is set in the central region of the frequency band to be checked.

4. Method according to claim 1, **characterized in that** the occupancy of a channel (C1, C2, C21, C22, C23, C24) is determined by the evaluation of an FFT (fast Fourier transform) or complex FFT of the signal received by the receiving unit (16, 47, 48, 69, 70).

5. Method according to one of the preceding claims, **characterized in that** the receiving unit (16, 47, 48, 69, 70) of the write/read station is adjusted to a bandwidth, so that at least two channels (C1, C2, C21, C22, C23, C24) are simultaneously evaluated and their occupancy checked.

6. Method according to claim 5, **characterized in that** the bandwidth of the receiving unit (16, 47, 48, 69, 70) is adjustable by adjusting the bandwidth of a filter (22).

7. Method according to claim 3, **characterized in that** the bandwidth of the receiving unit (16, 47, 48, 69, 70) is adjusted to approximately half of the band (B1) to be checked, and thus the simultaneous evaluation of the entire frequency band is possible.

8. Method according to claim 6, **characterized in that** the bandwidth of the receiving unit (16, 47, 48, 69, 70) is adjusted so that it is at least 1 MHz, and thus allows the simultaneous evaluation of a 2 MHz wide frequency band.

9. Method according to one of the preceding claims, **characterized in that** the sensitivity of the reception during the checking for free channels (C1, C2, C21, C22, C23, C24) is increased by reducing the attenuation of the received signal.

10. Method according to one of the preceding claims, **characterized in that** the communication with the at least one transponder and the checking for occupancy of the channels (C1, C2, C21, C22, C23, C24) is carried out simultaneously.

11. Method according to claim 10, **characterized**
- **in that** the evaluation of transponder signals on one channel (C1, C2, C21, C22, C23, C24) is carried out by using at least one receiving unit (47, 69), the demodulator of which is supplied with the transmission frequency by a frequency synthesizer (42, 61) connected to the transmitter, and the bandwidth of which corresponds to the bandwidth required for decoding the transponder data rate, and in that
- the checking for occupancy of the other channels (C1, C2, C21, C22, C23, C24) is carried out by at least one further receiving unit (48, 70), the demodulator of which is supplied with the frequency by a different frequency synthesizer (49, 62) which is not connected to the transmitter, and in that
- the evaluation and the checking can be carried out simultaneously.

12. Method according to claim 11, **characterized in that** each of the frequency synthesizers (61, 62) is connectable to the transmitter and the receiving unit (69) for communication with the transponders or to the receiving unit (70) for checking for free channels.

13. Method according to claim 12, **characterized in that** the switching process from the frequency synthesizer (61), which is set to the current transmission frequency, to the frequency synthesizer (62), which checks the occupancy of the other channels, is not carried out until the frequency synthesizer (62) for checking the channel occupancies has set a free channel.

14. Method according to one of the preceding claims, **characterized in that** a free channel is selected which has at least one immediately adjacent free channel above and at least one immediately adjacent free channel below.

15. Write/read station of an RFID system with at least one channel for communication between the write/read station and at least one transponder, wherein the channel is selectable by the write/read station, having at least one frequency synthesizer which is connected to a power amplifier (13) and to at least one receiving unit (16), wherein the at least one receiving unit (16) comprises at least one demodulator (21), at least one filter (22) and at least one control and evaluation unit (10),
**characterized**
**in that** the at least one filter (22) is configured as an adjustable filter and the filter bandwidth is selectable so that the channels (C1, C2, C21, C22, C23, C24) of the entire frequency band (B1) are included in the filter bandwidth, such that that the occupancy of a channel (C1, C2, C21, C22, C23, C24) is determinable by the evaluation of a transform of the signal received by the receiving unit in the frequency range, and that the occupancy of at least one channel (C1, C2, C21, C22, C23, C24) is checkable before the transmitting channel is changed.

16. Write/read station according to claim 15 for carrying out the method according to claim 1, **characterized in that** the sensitivity of the reception of the write/read station during the checking of the at least one channel (C1, C2, C21, C22, C23, C24) is adjustable by changing the attenuation factor of the at least one attenuating element (15) of the write/read station.

17. Write/read station according to claim 15 or 16, **characterized in that** the receiving unit (16) comprises at least two parallel filters (22), wherein the one filter has a filter bandwidth such that the channels of the entire frequency band are included therein, and the other filter has a filter bandwidth enabling the reception of transponder signals.

18. Write/read station according to claim 15, 16 or 17, **characterized in that** the at least one receiving unit (16) has an I-channel leading to the at least one evaluation and control unit (10) and a Q-channel leading to the at least one evaluation and control unit (10), so that a complex FFT of the sampled signal can be carried out by the evaluation and control unit (10).

19. Write/read station according to claim 15, 16 or 17, **characterized**
- **in that** the write/read station comprises at least two separate receiving units (47) and (48),
- **in that** the at least first receiving unit (47) is provided for evaluation of transponder signals on one channel,
- **in that** the at least first receiving unit (47) comprises a first frequency synthesizer (42) which supplies a demodulator with the transmission frequency, and which is connected to the power amplifier (44), and in that the bandwidth of the at least first receiving unit (47) corresponds to the bandwidth required for the decoding of the transponder data rate,
- **in that** at least one further receiving unit (48) is provided for checking for occupancy of the other channels,
- **in that** the at least one further receiving unit (48) comprises a second frequency synthesizer (49) which supplies a demodulator with the transmission frequency and is not connected to the transmitter, and
- **in that** the evaluation and the checking can be carried out simultaneously.

20. Write/read station according to one of claims 15 to 18, **characterized in that** the write/read station comprises at least two frequency synthesizers (61, 62) and at least one switching device (63, 64), and **in that** each of the frequency synthesizers (61, 62) is connectable by means of the at least one switching device (63, 64) to the transmitter and the receiving unit (69) for communication with the transponders or to the receiving unit (70) for checking for free channels.

21. Write/read station according to claim 15, **characterised in that** the power amplifier (13) can be switched off via a control line (19) during the search for free channels.

## Revendications

1. Procédé pour un système RFID comportant au moins un canal pour la communication entre un poste de lecture/écriture et au moins un transpondeur, dans lequel une bande de fréquence prédéfinie est divisée en une série de canaux émetteurs/récepteurs discrets à l'intérieur de la bande de fréquence, dans lequel le poste de lecture/écriture sélectionne à l'intérieur de la bande de fréquence un canal émetteur/récepteur, par lequel il peut communiquer avec un ou plusieurs transpondeurs, et dans le poste de lecture/écriture se produit une démodulation d'un signal de réception du/des transpondeur(s),
**caractérisé en ce que** le poste de lecture/écriture, avant le changement de canal émetteur, constate une occupation d'au moins un canal (C1, C2, C21, C22, C23, C24) moyennant le réglage d'au moins un synthétiseur de fréquence (11, 29, 61, 62) sur une zone de bande (E1, E2) qui inclut ledit au moins un canal (C1, C2, C21, C22, C23, C24) à examiner, et **en ce que** l'occupation d'un canal (C1, C2, C21, C22, C23, C24) est constatée moyennant l'analyse d'une transformation du signal reçu par l'unité réceptrice dans la gamme de fréquences.

2. Procédé selon la revendication 1, **caractérisé en ce que** ledit au moins un synthétiseur de fréquence (11, 49, 61, 62) est réglé de telle sorte que sa fréquence est réglée à l'intérieur dudit au moins un canal (C1, C2, C21, C22, C23, C24) à examiner.

3. Procédé selon la revendication 1, **caractérisé en ce que** ledit au moins un synthétiseur de fréquence (11, 49, 61, 62) est réglé de telle sorte que sa fréquence est réglée dans la zone centrale de la bande de fréquence à examiner.

4. Procédé selon la revendication 1, **caractérisé en ce que** l'occupation d'un canal (C1, C2, C21, C22, C23, C24) est constatée moyennant l'analyse d'une FFT (transformation de Fourier rapide) ou d'une FFT complexe du signal reçu par l'unité réceptrice (16, 47, 48, 69, 70).

5. Procédé selon l'une quelconque des revendications précédentes, **caractérisé en ce que** l'unité réceptrice (16, 47, 48, 69, 70) du poste de lecture/écriture est réglée à une largeur de bande, de telle sorte qu'au moins deux canaux (C1, C2, C21, C22, C23, C24) sont analysés simultanément et leur occupation est vérifiée.

6. Procédé selon la revendication 5, **caractérisé en ce que** la largeur de bande de l'unité réceptrice (16, 47, 48, 69, 70) est réglable moyennant le réglage de la largeur de bande d'un filtre (22).

7. Procédé selon la revendication 3, **caractérisé en ce que** la largeur de bande de l'unité réceptrice (16, 47, 48, 69, 70) est réglée approximativement à la moitié de la bande (B1) à vérifier, et l'analyse simultanée de la totalité de la bande de fréquence est ainsi possible.

8. Procédé selon la revendication 6, **caractérisé en ce que** la largeur de bande de l'unité réceptrice (16, 47, 48, 69, 70) est réglée de telle sorte qu'elle correspond au moins à 1 MHz et permet ainsi l'analyse simultanée d'une bande de fréquence avec une largeur de 2 MHz.

9. Procédé selon l'une quelconque des revendications précédentes, **caractérisé en ce que** la sensibilité de la réception pendant la vérification tendant à rechercher des canaux (C1, C2, C21, C22, C23, C24) libres est augmentée moyennant la diminution de l'amortissement du signal reçu.

10. Procédé selon l'une quelconque des revendications précédentes, **caractérisé en ce que** la communication avec ledit au moins un transpondeur et la vérification relative à l'occupation des canaux (C1, C2, C21, C22, C23, C24) sont effectuées simultanément.

11. Procédé selon la revendication 10, **caractérisé**
- **en ce que** l'analyse des signaux du/des transpondeur(s) sur un canal (C1, C2, C21, C22, C23, C24) est effectuée moyennant l'utilisation d'au moins une unité réceptrice (47, 69), vers le démodulateur de laquelle est acheminée la fréquence d'émission d'un synthétiseur de fréquence (42, 61) qui est relié à l'émetteur, et dont la largeur de bande correspond à la largeur de bande requise pour décoder la vitesse de transmission des données du/des transpondeur(s), et
- **en ce que** la vérification relative à l'occupation des autres canaux (C1, C2, C21, C22, C23, C24) est effectuée par au moins une autre unité réceptrice (48, 70), vers le démodulateur de laquelle est acheminée la fréquence d'un autre synthétiseur de fréquence (49, 62) qui n'est pas relié à l'émetteur, et
- **en ce que** l'analyse et la vérification sont effectuées simultanément.

12. Procédé selon la revendication 11, **caractérisé en ce que** chacun des synthétiseurs de fréquence (61, 62) peut être relié à l'émetteur et à l'unité réceptrice (69) pour communiquer avec les transpondeurs ou à l'unité réceptrice (70) pour vérifier la présence de canaux libres.

13. Procédé selon la revendication 12, **caractérisé en ce que** le processus de commutation du synthétiseur de fréquence (61), qui est réglé à la fréquence d'émission actuelle, vers le synthétiseur de fréquence (62), qui vérifie l'occupation des autres canaux, est effectué seulement lorsque le synthétiseur de fréquence (62) destiné à vérifier l'occupation des canaux a réglé un canal libre.

14. Procédé selon l'une quelconque des revendications précédentes, **caractérisé en ce qu'**est sélectionné un canal libre qui comporte en haut au moins un canal libre directement adjacent et en bas au moins un canal libre directement adjacent.

15. Poste de lecture/écriture d'un système RFID, comportant au moins un canal pour la communication entre le poste de lecture/écriture et au moins un transpondeur, ledit canal pouvant être sélectionné par le poste de lecture/écriture, comportant au moins un synthétiseur de fréquence qui est relié à un amplificateur de puissance (13) et à au moins une unité réceptrice (16), ladite au moins une unité réceptrice (16) comportant au moins un démodulateur (21), au moins un filtre (22) et au moins une unité de commande et d'analyse (10),
**caractérisé en ce que** ledit au moins un filtre (22) est réalisé sous la forme d'un filtre réglable, et la largeur de bande du filtre est sélectionnable de telle sorte que les canaux (C1, C2, C21, C22, C23, C24) de la bande de fréquence (B1) complète sont inclus dans la largeur de bande du filtre, de telle sorte que l'occupation d'un canal (C1, C2, C21, C22, C23, C24) peut être constatée moyennant l'analyse d'une transformation du signal reçu par l'unité réceptrice dans la gamme de fréquences, et **en ce que** l'occupation d'au moins un canal (C1, C2, C21, C22, C23, C24) est vérifiable avant le changement du canal émetteur.

16. Poste de lecture/écriture selon la revendication 15, permettant la mise en oeuvre du procédé selon la revendication 1, **caractérisé en ce que** la sensibilité de la réception du poste de lecture/écriture pendant la vérification dudit au moins un canal (C1, C2, C21, C22, C23, C24) peut être réglée moyennant la variation du taux d'amortissement dudit au moins un élément d'amortissement (15) du poste de lecture/écriture.

17. Poste de lecture/écriture selon la revendication 15 ou 16, **caractérisé en ce que** l'unité réceptrice (16) comporte au moins deux filtres (22) parallèles, l'un des filtres ayant une largeur de bande telle que les canaux de la bande de fréquence complète sont inclus dans celle-ci, et l'autre filtre comporte une largeur de bande permettant la réception des signaux du/des transpondeur(s).

18. Poste de lecture/écriture selon les revendications 15, 16 ou 17, **caractérisé en ce que** ladite au moins une unité réceptrice (16) comporte un canal I menant vers ladite au moins une unité d'analyse et de commande (10) et un canal Q menant vers ladite au moins une unité d'analyse et de commande (10), de telle sorte qu'une FFT complexe du signal palpé peut être effectuée par l'unité d'analyse et de commande (10).

19. Poste de lecture/écriture selon les revendications 15, 16 ou 17, **caractérisé**
- **en ce que** le poste de lecture/écriture comporte au moins deux unités réceptrices (47) et (48) séparées,
- **en ce que** ladite au moins une première unité réceptrice (47) est prévue pour l'analyse des signaux du/des transpondeur(s) sur un canal,
- **en ce que** ladite au moins une première unité réceptrice (47) comporte un premier synthétiseur de fréquence (42), qui achemine la fréquence d'émission vers un démodulateur et qui est relié à l'amplificateur de puissance (44), et en ce que la largeur de bande de ladite au moins une première unité réceptrice (47) correspond à la largeur de bande requise pour le décodage de la vitesse de transmission des données du/des transpondeur(s),
- **en ce que** ladite au moins une unité réceptrice (48) supplémentaire est prévue pour vérifier l'occupation des autres canaux,
- **en ce que** ladite au moins une unité réceptrice (48) supplémentaire comporte un deuxième synthétiseur de fréquence (49), qui achemine la fréquence d'émission vers un démodulateur et qui n'est pas relié à l'émetteur, et
- **en ce que** l'analyse et la vérification peuvent être effectuées simultanément.

20. Poste de lecture/écriture selon l'une quelconque des revendications 15 à 18, **caractérisé en ce que** le poste de lecture/écriture comporte au moins deux synthétiseurs de fréquence (61, 62) et au moins un dispositif de commutation (63, 64), et **en ce que** chacun des synthétiseurs de fréquence (61, 62) peut être relié, au moyen dudit au moins un dispositif de commutation (63, 64), à l'émetteur et à l'unité réceptrice (69) pour communiquer avec les transpondeurs ou à l'unité réceptrice (70) pour vérifier la présence de canaux libres.

21. Poste de lecture/écriture selon la revendication 15, **caractérisé en ce que** l'amplificateur de puissance (13) peut être déconnecté par l'intermédiaire d'une ligne de commande (19) pendant la recherche de canaux libres.
